# EUROPÄISCHE PATENTSCHRIFT

(11) **EP 2 931 816 B1**
(45) Veröffentlichungstag und Bekanntmachung des Hinweises auf die Patenterteilung: **18.09.2024**
(21) Anmeldenummer: 13805371.5
(22) Anmeldetag: 13.12.2013
(51) Int. Cl.: C09C 1/22, C09C 1/24, C08K 9/02, C08L 27/06, C08K 5/07

(54) **BESCHICHTETE PIGMENTE ZUR EINFÄRBUNG VON PVC**
COATED PIGMENTS FOR THE COLOURING OF PVC
PIGMENTS REVÊTUS POUR LA COLORATION DE PVC

(30) Priorität: 13.12.2012 EP 12197078
(43) Veröffentlichungstag der Anmeldung: 21.10.2015
(73) Patentinhaber: LANXESS Deutschland GmbH, 50569 Köln (DE)
(72) Erfinder: CHLOPEK, Krzysztof, 47804 Krefeld (DE); MEISEN, Ulrich, 53925 Kall (DE); KÖNIG, Ralf Gerhard, 40235 Düsseldorf (DE)
(86) Internationale Anmeldenummer: PCT/EP2013/076585
(87) Internationale Veröffentlichungsnummer: WO 2014/091008

(56) Entgegenhaltungen:
- EP-A2- 0 262 503
- EP-A2- 0 799 865

## Beschreibung

Die vorliegende Erfindung betrifft beschichtete Pigmente enthaltend zumindest ein anorganisches Pigment aus der Gruppe der Eisenoxide, Eisenoxidhydroxide, Zink-, Magnesium- oder Manganferrite, die mit einer Beschichtung enthaltend Hydroxide und/oder Oxide von Magnesium und/oder Calcium ausgestattet sind, Verfahren zu deren Herstellung, deren Verwendung zur Einfärbung von Polyvinylchlorid (PVC) sowie Verfahren zur Einfärbung von PVC und mit solchen beschichteten Pigmenten eingefärbtes PVC, sowie Kunststoffprodukte enthaltend solche beschichteten Pigmente.

PVC wird überwiegend als Grundstoff zum Beispiel für Fensterprofile, Rohre, Fußbodenbeläge und Dachbahnen im Bausektor eingesetzt. Hart- und Weichfolien werden ebenfalls aus PVC hergestellt. PVC wird auch oft als Isolationsmaterial für Elektro-Kabel, und für Elektro-Schalterdosen, Einziehrohre für Kabel, Kabelkanäle oder Kabelabdeckungen verwendet.

PVC gehört zu der Gruppe der amorphen thermoplastischen Kunststoffe. Der Kunststoff ist typischerweise hart und spröde und wird üblicherweise durch die Zugabe von Weichmachern und Stabilisatoren für die unterschiedlichen Anwendungen angepasst.

PVC wird typischerweise mit unterschiedlichen Gehalten an Weichmachern verwendet. PVC mit einem Gehalt an Weichmachern von 0 bis 12% wird auch Hart-PVC genannt. PVC mit einem Gehalt an Weichmachern von mehr als 12% wird auch Weich-PVC genannt (Römpp Chemielexikon, Online Version 3.28, letzte Aktualisierung des Artikels: Dezember 2009, Dokumentkennung: RD-16-03650). In der Regel werden Weichmacher-Gehalte in Gewichtsprozent angegeben.

PVC wird häufig mit organischen und anorganischen Pigmenten eingefärbt. Als organische Pigmente werden z. B. Isoindole, Naphthol AS, Kupferphthalocyanin-Pigmente oder Monoazo-Calcium-Salze eingesetzt. Aus der Gruppe der anorganischen Pigmente werden häufig Mischphasen-Metalloxid-Pigmente, wie Nickel-Rutil-Pigmente, Chrom-Rutil-Pigmente, Eisen-Chromite, inverse Cobalt- bzw. Kupfer-Spinelle oder Eisen-Cobalt-Chromit-Spinelle eingesetzt. Diese Pigmente sind sehr wetter- und lichtstabil, haben jedoch den Nachteil, dass sie mehrfach teurer sind als andere eisenhaltige anorganische Pigmente.

Auch die Einfärbung von PVC mit anorganischen Pigmenten wie Eisenoxide oder Eisenoxidhydroxide, Zink-, Magnesium- oder Manganferrite ist bekannt. Eisenoxide und Eisenoxidhydroxide zeichnen sich als besonders lichtechte Pigmente aus, die über eine lange Zeit auch bei unterschiedlichsten Witterungsbedingungen eine konstante Farbe aufweisen. Allerdings treten bei der Einfärbung von PVC mit Eisenoxiden oder Eisenoxidhydroxiden, Zink-, Magnesium- oder Manganferriten nach dem Stand der Technik sowohl bei der Verarbeitung bei den erforderlichen hohen Temperaturen als auch beim Aussetzen des geformten Kunststoffes an Licht, UV-Licht oder Wärme homogene oder inhomogene Verfärbungen des Produktes auf. Dieses ungewünschte Phänomen ist bei Hart-PVC deutlich gravierender, da Produkte aus Hart-PVC häufig in Außenbereichen eingesetzt werden, in denen witterungsbedingte Einflüsse natürlich intensiver sind. Bei Produkten aus Weich-PVC, die überwiegend in Innenbereichen eingesetzt werden, treten solche Verfärbungen gelegentlich ebenfalls auf, z.B. kurz nach der Verarbeitung. Diese negativen Effekte sind bereits seit langem bekannt und sind beispielsweise in S.S. Lele, J. Vinyl Tech. 1984, Vol. 6, No.2, S. 77 bis 81 oder P.Carty et al., Polymer 1992, Vol. 33, No. 13, S. 2704-2708 beschrieben.

Aus EP 799865-A2 sind beschichtete Pigmente bestehend aus einem Kern bestehend aus Eisenoxid und Titandioxid sowie einer äußeren Beschichtung enthaltend Oxide von Magnesium und/oder Calcium.

Die DE 3539306 A1 beschreibt hitzebeständige Gelbpigmente, die mit Aluminiumphosphathydroxiden der allgemeinen Formel [AlO]ₓPO₄[OH]ₓ₋₃ beschichtet wurden, zur Einfärbung von thermoplastischen Kunststoffen. Eigene Versuche haben jedoch gezeigt, dass mit diesen beschichteten Pigmenten eingefärbtes PVC keine hinreichend höhere thermische Stabilität aufweist als das mit dem unbeschichteten Pigment eingefärbtes PVC. Eigene Versuche haben auch gezeigt, dass PVC, das durch mit anderen anorganischen Aluminiumverbindungen, z.B. Aluminiumoxid bzw. Aluminiumhydroxid oder Magnesiumphosphat beschichtete Eisenoxide eingefärbt ist, ebenfalls keine höhere thermische Stabilität aufweist als PVC, das durch unbeschichtete Eisenoxide eingefärbt ist. Daher bestand die Aufgabe der vorliegenden Erfindung darin, anorganische Pigmente aus der Gruppe Eisenoxide, Eisenoxidhydroxide, Zinkferrite, Magnesiumferrite und/oder Manganferrite bereitzustellen, die nicht zu ungewünschten homogenen oder inhomogenen Verfärbungen des damit eingefärbtem PVC, sowohl in Form von Kunststoffprodukten als auch von daraus hergestellten Produkten, führen.

Aus EP262503 A2 sind Eisenoxidpigmente beschrieben, die eine Beschichtung aufweisen, die aus Verbindungen einer oder mehrerer der Gruppe Mg, Ca, Al und/oder Zn besteht, wobei die konkret beschichteten Pigmente jeweils einen Mg Anteil von kleiner 3 Gew.% oder einen Ca-Anteil von kleiner 5 Gew.%, bezogen auf das Gesamtgewicht des beschichteten Pigments aufweisen.

Überraschenderweise wurde nun gefunden, dass beschichtete Pigmente enthaltend zumindest ein anorganisches Pigment aus der Gruppe Eisenoxide, Eisenoxidhydroxide, Zinkferrite, Magnesiumferrite und/oder Manganferrite, wobei das zumindest eine anorganische Pigment mit einer Beschichtung enthaltend Hydroxide und/oder Oxide von Magnesium und/oder Calcium ausgestattet ist, wobei das beschichtete Pigment von 3,1 bis 30 Gew.% Magnesium oder von 5,0 bis 30 Gew.% Calcium, bezogen auf das Gesamtgewicht des beschichteten Pigments enthält, diese Aufgabe lösen und die oben beschriebenen Nachteile der Pigmente des Standes der Technik überwinden.

Als Eisenoxide enthalten die erfindungsgemäßen beschichteten Pigmente beispielsweise Hämatit (Eisenoxid Rot, α-Fe₂O₃), Maghemit (braunes Eisenoxid, γ-Fe₂O₃) oder Magnetit (Eisenoxid Schwarz, Fe₃O₄), bevorzugt Hämatit (Eisenoxid Rot, α-Fe₂O₃).

Aus der Gruppe der Eisenoxidhydroxide enthalten die erfindungsgemäßen beschichteten Pigmente z.B. Goethit (Eisenoxid Gelb, α-FeOOH) oder Lepidocrocit (γ-FeOOH).

Zinkferrite, Magnesiumferrite und/oder Manganferrite gehören zu der Gruppe der Mischphasenpigmente der allgemeinen Formel MₓFe₃₋ₓO₄, wobei M für Zn, Mg oder Mn steht, und x Werte größer 0 und kleiner als oder gleich 1 umfasst. Das erfindungsgemäße beschichtete Pigment kann auch ein oder mehrere unterschiedliche der vorgenannten Mischphasenpigmente enthalten. Bevorzugt enthält das erfindungsgemäße beschichtete Pigment nur ein anorganisches Pigment.

Die erfindungsgemäßen beschichteten Pigmente sind mit Hydroxiden und/oder Oxiden von Magnesium und/oder Calcium beschichtet. Beschichtet heißt im Zusammenhang mit der vorliegenden Erfindung, dass die Oberfläche eines Kerns aus dem anorganischen Pigment direkt mit einer ihn umhüllenden Schicht der Hydroxide und/oder Oxide von Magnesium und/oder Calcium verbunden ist. Die Beschichtung kann beispielsweise über elektronenmikroskopische Aufnahmen der Pigmente nachgewiesen werden.

Die erfindungsgemäßen beschichteten Pigmente können neben der ersten Beschichtung aus Hydroxiden und/oder Oxiden von Magnesium und/oder Calcium zumindest mit einer weiteren Beschichtung, entweder einer organischen Beschichtung, bevorzugt einer organischen Beschichtung aus Ölen und/oder Wachsen und/oder Fettsäuresalzen, oder einer anorganischen Beschichtung ausgestattet sein oder eben nicht. Bevorzugt sind die erfindungsgemäßen beschichteten Pigmente mit keiner organischen Beschichtung ausgestattet. Dies bedeutet, dass die beschichteten Pigmente gemäß dieser Erfindung bevorzugt ausschließlich mit einer anorganischen Beschichtung enthaltend Hydroxide und/oder Oxide von Magnesium und/oder Calcium ausgestattet sind.

Als Öle werden in dem erfindungsgemäßen Zusammenhang unpolare oder leicht polare, nicht leichtflüchtige, bei Raumtemperatur flüssige Substanzen verstanden. Bevorzugt sind Öle mit einer kinematischen Viskosität von 1,6 bis 1.500 mm²/s bei 40°C (gemessen nach DIN 51562). In den erfindungsgemäßen Mitteln sind weiterhin bevorzugt die Öle aus der Gruppe von synthetischen Ölen, die im Wesentlichen aus den Elementen Kohlenstoff und Wasserstoff und/oder Stickstoff und/oder Sauerstoff und/oder Schwefel und/oder Halogenen (vorzugsweise Fluor, Chlor, Brom und/oder Iod) und/oder Bor bestehen, mineralischen Ölen, tierischen und/oder pflanzlichen Ölen ausgewählt. Besonders bevorzugt sind in den erfindungsgemäßen Mitteln synthetische Öle auf Kohlenwasserstoffbasis oder mineralische (aus Erdölen oder Kohlen gewonnene) Öle enthalten.

Wachse können aus der Gruppe von Fischer-Tropsch Wachsen, Mineralwachsen, Montanwachsen, pflanzlichen Wachsen und/oder tierischen Wachsen ausgewählt werden. Fischer-Tropsch Wachse sind synthetische aliphatische Kohlenwasserstoffe, d.h. synthetische Paraffin-Wachse mit hoher Molekülmasse und einer Kettenlänge von 20 bis 120 Kohlenstoffatomen. Zu der Gruppe der Fischer-Tropsch Wachse gehören auch oxidierte Fischer-Tropsch Wachse. Fischer-Tropsch Wachse weisen in der Regel einen Erstarrungspunkt von größer als 70°C auf. Sie sind relativ hart, was über die Nadelpenetration bei 25°C in der Einheit "mm" gemessen werden kann. Für die Messung der Nadelpenetration bei unterschiedlichen Temperaturen, wie z.B. 25°C oder 65°C existieren z.B. die Methoden nach ASTM D 1321 oder DIN 51579. Für diese Wachse liegen typische Werte der Nadelpenetration bei 25°C im Bereich von 0,1 mm bis 1 mm. Fischer-Tropsch Wachse werden über das sogenannten Fischer-Tropsch-Verfahren aus Synthesegas (Wasserstoff, Kohlenmonoxid) aus Kohlevergasung oder aus Erdgas in Gegenwart von Katalysatoren hergestellt. Mineralwachse sind Gemische normaler, verzweigtkettiger und ringförmiger gesättigter Kohlenwasserstoffe, die durch Raffination von Wachsen fossilen Ursprungs gewonnen werden, wie z.B. Ceresin. Zu der Gruppe der Mineralwachse gehören auch die mikrokristallinen Hartwachse. Montanwachse sind aus Braunkohlesorten extrahierbare natürliche Wachse. Diese sind aus Harzen, Wachsen u. Fetten tertiärer Pflanzen entstanden. Pflanzliche Wachse sind z.B. Zuckerrohrwachs oder Carnaubawachs. Zu den tierischen Wachsen gehören Walrat, Wollwachs und Bienenwachs. Die Wachse können dabei in ihrer ursprünglichen, d.h. nicht chemisch modifizierten Form, oder in deren chemisch modifizierten Formen vorliegen.

Fettsäuresalze, auch Metallseifen genannt, werden bevorzugt aus der Gruppe aus Zink-, Calcium-, Magnesium- und/oder Bariumsalzen der Laurinsäure (Dodecansäure), Myristinsäure (Tetradecansäure) und/oder Stearinsäure (Octadecansäure), besonders bevorzugt aus Magnesiumstearat, Zinkstearat und/oder Calciumstearat ausgewählt.

Im erfindungsgemäßen beschichteten Pigment ist das enthaltene Pigment aus der Gruppe der Eisenoxide bevorzugt Hämatit, und dieses beschichtete Pigment weist bevorzugt einen isoelektrischen Punkt von <7, besonders bevorzugt von <6,8 auf. In einer weiteren bevorzugten Ausführungsform ist das enthaltene Pigment aus der Gruppe der Eisenoxide, Eisenoxidhydroxide, Zinkferrite, Magnesiumferrite und/oder Manganferrite, wobei Hämatit ausgenommen ist, ausgewählt, wobei das beschichtete Pigment bevorzugt einen isoelektrischen Punkt von 2 bis 12 aufweist. Der isoelektrische Punkt (IEP), der auch Zeta-Potenzial genannt wird, wird gemäß ISO 13099-2 gemessen.

Der isoelektrische Punkt liegt bei den beschichteten Eisenoxidhydroxiden typischerweise von 3 bis 11. Die untere Grenze des IEP liegt bei den erfindungsgemäßen beschichteten Pigmenten typischerweise bei 2.

In einer weiteren bevorzugten Ausführungsform enthält das beschichtete Pigment von 3,5 bis 25 Gew.%, Magnesium oder von 5,5 bis 25 Gew.% Calcium, bezogen auf das Gesamtgewicht des beschichteten Pigments. Der Magnesium- oder Calciumgehalt des beschichteten Pigmentes wird als Gehalt des betreffenden Elementes, sofern nichts anderes angegeben ist, über Optische Emissionsspektrometrie nach Anregung im induktiv gekoppeltem Plasma (ICP-OES) bestimmt. Dazu wird der Magnesium- oder Calciumgehalt des gesamten beschichteten Pigmentes bestimmt. Die Gewichtsprozente weisen den gesamten Anteil als Summe der Gehalte von Magnesium und Calcium aus.

In einer weiteren bevorzugten Ausführungsform werden die Pigmente ausschließlich mit Hydroxiden und/oder Oxiden von Magnesium beschichtet. Die eingesetzten unbeschichteten Pigmente enthalten typischerweise Spuren von Calciumsalzen. Deshalb enthalten die mit Hydroxiden und/oder Oxiden von Magnesium beschichteten Pigmente dieser bevorzugten Ausführungsform typischerweise von 0,3 bis 30 Gew.%, besonders bevorzugt von 0,5 bis 25 Gew.%, ganz besonders bevorzugt von 0,5 bis 20 Gew.% Magnesium, und 0,001 bis 0,1 Gew.% Calcium.

Die erfindungsgemäßen beschichteten Pigmente weisen bevorzugt DIN pH Werte gemäß EN ISO 787-9 von 8 bis 12, besonders bevorzugt von 8,5 bis 12, ganz besonders bevorzugt von 9 bis 12 auf. Weiterhin weisen die erfindungsgemäßen beschichteten Pigmente bevorzugt spezifische BET Oberflächen, gemessen nach DIN ISO 9277, von 7 bis 150 m²/g, bevorzugt von 12 bis 90 m²/g auf.

In einer weiteren bevorzugten Ausführungsform bestehen die beschichteten Pigment aus zumindest einem anorganischen Pigment aus der Gruppe Eisenoxide, Eisenoxidhydroxide, Zinkferrite, Magnesiumferrite und/oder Manganferrite, wobei das zumindest eine anorganische Pigment mit einer Beschichtung enthaltend Hydroxide und/oder Oxide von Magnesium und/oder Calcium, besonders bevorzugt enthaltend Hydroxide von Magnesium und/oder Calcium, ausgestattet ist.

In einer weiteren bevorzugten Ausführungsform enthält das beschichtetes Pigment zumindest ein anorganisches Pigment aus der Gruppe Eisenoxide, Eisenoxidhydroxide, Zinkferrite, Magnesiumferrite und/oder Manganferrite, wobei das zumindest eine anorganische Pigment mit einer Beschichtung enthaltend Hydroxide und/oder Oxide von Magnesium und/oder Calcium ausgestattet ist, wobei die Oberfläche eines Kerns aus dem anorganischen Pigment direkt mit einer ihn umhüllenden Schicht der Hydroxide und/oder Oxide von Magnesium und/oder Calcium verbunden ist.

Die Erfindung umfasst jede denkbare Kombination der verschiedenen definierten Verfahrens- und Stoffparameter und ihrer Vorzugsbereiche.

Überraschenderweise wurde nun gefunden, dass mit den erfindungsgemäßen beschichteten Pigmenten eingefärbtes PVC eine höhere thermische Stabilität aufweist als mit den entsprechenden nichtbeschichteten Pigmenten eingefärbtes PVC. Die erhöhte thermische Stabilität des mit dem erfindungsgemäßen beschichteten Pigmenten gefärbten PVC kann zum einen mittels einer thermischen Behandlung mit einem Kneter gezeigt werden, wenn der zeitliche Verlauf des Drehmomentes, das an dem Kneter anliegt, und der Temperatur des gekneteten Produktes aufgezeichnet und für verschiedene Proben verglichen wird. Bei der Zersetzung des PVC tritt eine Degradierung des Polymers auf, was zu einer Verringerung der Viskosität und damit zur Abnahme des Drehmomentes, das an dem Kneter anliegt, führt.

Weiterhin kann die erhöhte thermische Stabilität des mit dem erfindungsgemäßen beschichteten Pigment gefärbten PVC über die Testung von Probenkörpern im Mathis-Ofen gemessen werden. Die Einzelheiten zu den Messmethoden und zu deren Auswertung finden sich im Abschnitt "Beispiele und Methoden".

Die vorliegende Erfindung betrifft auch die Verwendung des erfindungsgemäßen beschichteten Pigments zur Einfärbung von PVC, bevorzugt von Hart-PVC.

Die vorliegende Erfindung betrifft auch ein Verfahren zum Einfärben von PVC, vorzugsweise Hart-PVC, mit dem erfindungsgemäßen beschichteten Pigment. Die Einfärbung kann nach üblichen Methoden, z.B. durch Mischen, Kneten oder Extrudieren von ungefärbtem PVC mit dem beschichteten Pigment in der Schmelze oder durch Schmelzen von PVC Dry-Blends, die das erfindungsgemäße beschichtete Pigment enthalten, erfolgen.

Die vorliegende Erfindung betrifft auch Kunststoffprodukte, für die synonym auch die Begriffe Masterbatch, Compounds oder eingefärbtes Endprodukt verwendet werden, enthaltend zumindest ein erfindungsgemäßes beschichtetes Pigment sowie weiterhin enthaltend PVC, bevorzugt Hart-PVC. Bevorzugte Kunststoffprodukte sind solche, die eingefärbtes PVC enthalten. Alternativ bevorzugte Kunststoffprodukte sind solche, die zumindest ein erfindungsgemäßes beschichtetes Pigment und zumindest ein Polymer enthalten, wobei das zumindest eine Polymer ein PVC-Homopolymer ist, d.h. ein Polymer, das ausschließlich aus dem Monomer Vinylchlorid aufgebaut ist. Weitere alternativ bevorzugte Kunststoffprodukte sind solche, die als Kunststoff zumindest ein Polymer aufweisen, wobei der Kunststoff bevorzugt zumindest zu 50 Gew.%, besonders bevorzugt zumindest zu 80 Gew.%, aus dem Monomer Vinylchlorid aufgebaut ist. Dies gilt zum einen für den Fall, dass es sich bei dem Kunststoff um ein PVC-Copolymer handelt, das neben Vinylchlorid auch aus anderen Monomeren, z.B. Vinylacetat oder Butylacrylat, aufgebaut ist. Dann ist das Copolymer bevorzugt zumindest zu 50 Gew.%, besonders bevorzugt zumindest zu 80 Gew.%, aus dem Monomer Vinylchlorid aufgebaut. Dies gilt zum anderen für den Fall, dass es sich bei dem Kunststoff um Mischungen oder Blends von verschiedenen Polymeren handelt, wovon einer der Polymeren ein PVC-Homopolymer oder ein PVC-Copolymer ist. Dann ist die Mischung oder der Blend bevorzugt zumindest zu 50 Gew.%, besonders bevorzugt zumindest zu 80 Gew.%, aus dem Monomer Vinylchlorid aufgebaut. Unter eingefärbtem PVC ist im Sinne der Erfindung ein PVC zu verstehen, bei dem das erfindungsgemäße beschichtete Pigment in die Polymermatrix des Polyvinylchlorids eingelagert ist.

Compounds enthalten beispielsweise weiterhin Verarbeitungshilfsmittel, Verstärkungsmittel, Füllstoffe, Farbstoffe, weitere Pigmente und andere organische und anorganische Zusatzstoffe und ermöglichen so die Herstellung von unterschiedlichsten Formteilen durch z.B. Extrusion, Spritzguss, Kalandrieren oder Formblasen. Die Formteile entsprechen in der Regel den Endprodukten, im Zusammenhang mit dieser Erfindung Produkte genannt, z.B. Fensterrahmen, Rohre, Isolationsmaterial, Folien oder Flaschen. Zum Einfärben des PVC werden zu den Compounds Masterbatche oder direkt das Pigment zugegeben.

Das erfindungsgemäße Kunststoffprodukt enthält je nach Verwendungszweck unterschiedliche Mengen an erfindungsgemäßem beschichteten Pigment.

Masterbatche werden typischerweise als "Farbkonzentrate" zur Färbung von PVC oder anderen Kunststoffprodukten eingesetzt. Deshalb weisen diese Masterbatche einen relativ hohen Pigmentgehalt von größer 10 bis 90 Gew.%, besonders bevorzugt von 20 bis 70 Gew.% erfindungsgemäßem beschichtetem Pigment auf.

Liegt das Kunststoffprodukt bereits in seiner zur endgültigen Verwendung als Compound mit der gewünschten Farbe vor, betragen die Gehalte an erfindungsgemäßem beschichteten Pigment bevorzugt von 0,1 bis 10 Gew.%, besonders bevorzugt 0,5 bis 5 Gew.%.

Die vorliegende Erfindung betrifft auch ein Verfahren zur Herstellung der erfindungsgemäßen Kunststoffprodukte, insbesondere von Compounds und Masterbatchen, durch Kneten oder Extrudieren von PVC mit dem erfindungsgemäßen beschichteten Pigment.

PVC wird erfindungsgemäß mit unterschiedlichen Gehalten an Weichmachern verwendet. PVC mit einem Gehalt an Weichmachern von 0 bis 12% wird auch Hart-PVC genannt. PVC mit einem Gehalt an Weichmachern von mehr als 12% wird auch Weich-PVC genannt (Römpp Chemielexikon, Online Version 3.28, letzte Aktualisierung des Artikels: Dezember 2009, Dokumentkennung: RD-16-03650).

Die Erfindung betrifft auch ein Kunststoffprodukt enthaltend von 0 bis 15 Gew.%, bevorzugt von 0 bis 12 Gew.% Weichmacher bezogen auf die im Kunststoffprodukt enthaltene Menge an PVC.

Geeignete Weichmacher sind z.B. Primär-, Sekundärweichmacher und Extender. Primärweichmacher sind z.B. Phthalsäureester, Trimellithsäureester, Phosphate und Polymerweichmacher. Sekundärweichmacher sind z.B. Adipate, Azelate, Decandisäureester und Alkylfettsäureester. Unter die Gruppe der Extender fallen z.B. aromatische Kohlenwasserstoffe und Chlorparaffine (aus Römpp Chemielexikon, Online Version 3.2.8, letzte Aktualisierung des Artikels: März 2006, Dokumentkennung: RD-23-00480).

Die vorliegende Erfindung betrifft auch ein Kunststoffprodukt, für das auch der Begriff "PVC Dry-Blend" verwendet wird, enthaltend eine Mischung aus pulverförmigem PVC, vorzugsweise Hart-PVC und erfindungsgemäßem beschichteten Pigment. Solche PVC Dry-Blends können weiterhin auch die für die Herstellung von Compounds erforderlichen Zuschlagstoffe (z.B. Füllstoffe, Stabilisatoren, gegebenenfalls weitere Weichmacher, Farbstoffe, gegebenenfalls weitere Pigmente) enthalten. Diese können entweder in Substanz neben dem oder bereits eingearbeitet in das PVC des Dry-Blends vorliegen. Dry-Blends werden typischerweise durch intensives Mischen seiner oben beschriebenen Bestandteile kurz unter dem Schmelzpunkt des Kunststoffes hergestellt. Aus den Dry-Blends können durch die für PVC üblichen Verarbeitungsmethoden wie Extrusion, Spritzguss, Kalandrieren oder Formblasen die Produkte hergestellt werden.

Die vorliegende Erfindung betrifft auch ein Produkt, für das synonym im Zusammenhang mit dieser Erfindung auch die Begriffe Formteil oder Fertiggut verwendet werden, enthaltend mindestens ein erfindungsgemäßes Kunststoffprodukt. Solche Produkte sind z.B. Fensterprofile, Rohre, Fußbodenbeläge, Isoliermaterial oder Dachbahnen.

Die vorliegende Erfindung betrifft auch ein Verfahren zur Herstellung der erfindungsgemäßen beschichteten Pigmente. Zur Beschichtung können alle Verfahren angewendet werden, die zu einer Beschichtung der genannten Verbindungen auf anorganischen Pigmenten führen. Dazu gehören Aufmahlen, Auffällen oder Aufsprühen der Verbindungen, mit denen das anorganische Pigment beschichtet werden soll, sowohl als Feststoff oder als Suspension.

Das bevorzugte erfindungsgemäße Verfahren umfasst zumindest die Schritte
a) Bereitstellen einer wässrigen Suspension zumindest eines anorganisches Pigment aus der Gruppe Eisenoxide, Eisenoxidhydroxide, Zinkferrite, Magnesiumferrite und/oder Manganferrite,
b) Auffällung der Beschichtung aus Hydroxiden und/oder Oxiden von Magnesium und/oder Calcium auf das anorganische Pigment durch Zugabe von Magnesium- und/oder Calciumsalzen, bevorzugt in gelöster Form, zu der Suspension aus Schritt a) und danach Zugabe eines Fällungsmittels aus der Gruppe Alkalihydroxide, Erdalkalihydroxide, oder Ammoniak, bevorzugt in gelöster Form, zu der Suspension oder
b') Auffällung der Beschichtung aus Hydroxiden und/oder Oxiden von Magnesium und/oder Calcium auf das anorganische Pigment durch Zugabe eines Fällungsmittels aus der Gruppe Alkalihydroxide, Erdalkalihydroxide, oder Ammoniak, bevorzugt in gelöster Form, zu der Suspension aus Schritt a) und danach Zugabe von Magnesium- und/oder Calciumsalzen, bevorzugt in gelöster Form, zu der Suspension,
wobei das beschichtete Pigment erhalten wird.

Das bevorzugte Verfahren zur Herstellung von erfindungsgemäßem beschichtetem Pigment umfasst gegebenenfalls zusätzlich einen, zwei, drei oder vier der Schritte i) Isolierung des beschichteten Pigmentes, ii) Wäsche des beschichteten Pigmentes, iii) Trocknung des beschichteten Pigmentes, und iv) Zerkleinerung des beschichteten Pigmentes, vorzugsweise in der angegebenen Reihenfolge.

Die in Schritt a) des bevorzugten Verfahrens eingesetzten Pigmente sind pulverförmige Pigmente oder Pasten aus Pigmenten, die direkt aus dem Pigment-Herstellungsprozess stammen. Pasten sind fließfähige, pigmenthaltige, wässrige Suspensionen.

In einer weiteren Variante (Schritt b") kann die Zugabe des Fällungsmittels aus der Gruppe Alkalihydroxide, Erdalkalihydroxide, oder Ammoniak, bevorzugt in gelöster Form, und der Magnesium- und/oder Calciumsalze, bevorzugt in gelöster Form, zu einer vorgelegten Pigmentsuspension auch simultan erfolgen. Durch die alternativen Schritte b), b') oder b") wird das anorganische Pigment mit Hydroxiden und/oder Oxiden von Magnesium und/oder Calcium beschichtet.

Die in dem erfindungsgemäßen Verfahren besonders bevorzugten Fällungsmittel sind Natriumhydroxid und/oder Kaliumhydroxid.

Bei den Varianten gemäß der Schritte b), b') oder b") werden bevorzugt Magnesium- und/oder Calciumsalze, besonders bevorzugt deren wässrige Lösungen, ganz besonders bevorzugt Magnesiumsulfat, Magnesiumchlorid, Magnesiumnitrat, Calciumchlorid, und/oder Calciumnitrat eingesetzt.

Während der Auffällung der Beschichtung aus Hydroxiden und/oder Oxiden von Magnesium und/oder Calcium auf das anorganische Pigment und gegebenenfalls während der Nachreaktion wird bevorzugt eine Temperatur von 10 bis 99°C, besonders bevorzugt von 20 bis 85°C, ganz besonders bevorzugt von 20 bis 70°C gewählt.

Die Zeit, während der entweder das Fällungsmittel oder die Magnesium- und/oder Calciumsalze zu der Reaktionsmischung zugegeben werden, kann innerhalb von breiten Werten schwanken.

Bevorzugt erfolgt eine Mischung der Reaktionskomponenten in den Schritten b), b') oder b"), besonders durch statische oder dynamische Mischer. Hierzu werden zum Beispiel Rührer, Propeller, Schaufeln, und /oder Pumpen eingesetzt.

Das Reaktionsgemisch aus den Schritten b), b') oder b") wird nach der Zugabe der Komponenten gegebenenfalls noch weiter durchmischt, um die Auffällung der Hydroxide und/oder Oxide von Magnesium und/oder Calcium auf das anorganische Pigment möglichst vollständig verlaufen zu lassen. Die Zeit für die Nachreaktion ist abhängig von der Größe des Reaktionsansatzes. Zu Überprüfung der Vollständigkeit der Reaktion können in zeitlichen Intervallen Proben gezogen werden, die auf den Magnesium- und/oder Calciumgehalt untersucht werden. Wird der erwartete Magnesium- und/oder Calciumgehalt erreicht, ist die Reaktion beendet.

Nach beendeter Reaktion wird das erfindungsgemäße beschichtete anorganische Pigment gegebenenfalls von der Reaktionsmischung mit üblichen Methoden, wie z.B. Filtrieren oder Zentrifugieren, abgetrennt. Der abgetrennte Feststoff wird dann gegebenenfalls mit Wasser, bevorzugt mit vollentsalztem Wasser, gewaschen, bevorzugt, bis das Filtrat nur noch eine Leitfähigkeit von kleiner als oder gleich 1000 µS/m, bevorzugt von kleiner als oder gleich 500 µS/m aufweist.

In Verfahren zur Herstellung von Pigmenten werden teilweise Kalzinierungsschritte eingesetzt. Unter Kalzinierung wird eine thermische Behandlung eines festen oder halbfeuchten Pigments bei Temperaturen von größer als 600°C verstanden. Dies ist gegebenenfalls erforderlich, wenn Pigmente entwässert oder in andere Modifikationen umgewandelt werden sollen. In dem erfindungsgemäßen Verfahren ist ein Kalzinierungsschritt nicht erforderlich. In einer bevorzugten Ausführungsform des erfindungsgemäßen Verfahrens ist daher ein Kalzinierungsschritt ausgeschlossen. In einer besonders bevorzugten Ausführungsform des erfindungsgemäßen Verfahrens ist daher ein Kalzinierungsschritt bei Temperaturen von größer als 600°C ausgeschlossen.

Die erfindungsgemäßen beschichteten Pigmente stellen eine Verbesserung des Standes der Technik dar, da Kunststoffprodukte und Produkte aus PVC, die mit den erfindungsgemäßen beschichteten Pigmenten eingefärbt sind, eine hohe thermische Stabilität und UV-Stabilität aufweisen.

### Beispiele und Methoden

### I. Beschreibung der verwendeten Mess- und Prüfmethoden

Die Ergebnisse der Messungen zu den Beispielen sind in Tabelle 1 zusammengefasst.

### I.1 Zeta-Potential (Isoelektrischer Punkt, IEP)

Das Zeta-Potential wurde gemäß ISO 13099-2 auf "Zetasizer Nano Z" der Fa. Malvern Instruments GmbH (mit einem He-Ne Laser 633nm) bestimmt.

### I.2 DIN pH-Wert

Der DIN pH-Wert von Pigmenten wurde gemäß EN ISO 787-9 gemessen.

### I.3 Mg- und Ca-Bestimmung

Der Magnesium- und Calciumgehalt der Pigmente wurde über Optische Emissionsspektrometrie nach Anregung im induktiv gekoppeltem Plasma (ICP-OES: inductively coupled plasma-optical emission spectrometry) als Gehalt der Elemente gemessen.

### I.4 Spezifische BET-Oberfläche

Die spezifische BET-Oberfläche wurde nach DIN ISO 9277 gemessen.

### I.5 Abtestung der PVC-Stabilität mittels Mathis-Ofen Typ LTE-T der Fa. Werner Mathis AG (Mathis-Ofen-Stabilität)

Die für die Abtestung benötigten Teststreifen, werden auf einem Mischwalzwerk (Servitec Polymix 150L) hergestellt. Hierzu werden 50g Hart PVC Compound (SorVyl DB 6668 Natur 3/03 PVC-Compound der Fa. Firma Polymer- Chemie GmbH) und 2 g des zu testenden Pigmentes (4 Gew. %), in einem Polyethylenbecher eingewogen und mit einem Spatel innig vermischt. Die Mischung wird auf das Mischwalzwerk aufgebracht und bei 175°C und einer Friktion von 1: 1,2 zu einem Fell von 200 µm Dicke ausgewalzt. Unter ständigem Wenden wird das Pigment 10 min lang dispergiert.

Das so hergestellte Walzenfell wird von der Walze abgenommen. Mit einer Schlagschere werden die für den anschließenden Test im Mathis-Ofen benötigten Streifen von 50 cm Länge und 2 cm Breite präpariert und in den Materialträger des Mathis-Ofen eingespannt.

Beim Mathis-Ofen-Thermotest (Thermotester Typ LTE-T, Prüfschrank zur Abtestung der thermischen Stabilität von Kunststoffen der Fa. Werner Mathis AG, Oberhasli/Zürich, Schweiz) werden PVC-Proben einer unterschiedlich langen Wärmebelastung ausgesetzt, die durch den diskreten Vorschub eines Schlittens aus dem Ofen vorgegeben ist. Die Temperatur während des Tests beträgt 190°C. Der die PVC-Prüfkörper enthaltende Materialträger wird alle 5 Minuten je 75 mm weiter aus dem Ofen geschoben (Einstellung am Ofen: Intervallzeit 5 Minuten, Vorschub 75 mm), wobei sich der aus dem Ofen geschobene Teil schnell auf Raumtemperatur abkühlt. Dadurch befinden sich auf dem Prüfkörper direkt hintereinanderliegende Zonen von je 75 mm Länge, die jeweils 5 Minuten länger thermisch belastet wurden als die davor liegende Zone. Die PVC-Zersetzung setzt bei unterschiedlichen Pigmenten zu unterschiedlichen Zeiten ein und lässt den Teststreifen ab einer bestimmten Zone dunkler bis schwarz werden. Zur Beurteilung der Pigment-Eignung bezüglich der Stabilisierung von PVC werden jeweils zwei Zeiten angegeben, z.B. 35 / 45, wobei diese Werte Minuten (Min.) angeben. Die erste Zeit, in diesem Beispiel 35 Min., ist die Verweildauer in Minuten der entsprechenden Prüfkörper-Zone im Mathis-Ofen, bei der noch keine Verfärbung der entsprechenden Prüfkörper-Zone sichtbar ist. Die zweite Zeit, in diesem Beispiel 45 Min., ist die Verweildauer in Minuten der entsprechenden Prüfkörper-Zone im Mathis-Ofen, bei der die Verfärbung der entsprechenden Prüfkörper-Zone erstmals maximal ist. In der Regel sind die entsprechenden Prüfkörper-Zonen nach der maximalen Verfärbung schwarz gefärbt.

### I.6 Abtestung der PVC-Stabilität mittels Kneter Thermo Haake Rheomix 600p (Kneter-Stabilität)

Eine pulverförmige PVC-Mischung bestehend aus 50 Gew. % Vestolit B 7021 Ultra + 50 Gew. % SorVyl DB 6668 Natur 3/03 wird mit der zu testenden pulverförmigen Pigmentprobe (4 Gew. % bezogen auf 100% PVC- Zusammensetzung) homogen vermischt.

Die pigmentierte PVC-Mischung wird in dem auf 190°C vorgeheizten Messkneter (Thermo Haake Rheomix 600p mit Walzenrotoren R6), der mit einem Rotationsrheometer ausgerüstet ist, händisch eingefüllt. Das Messprogramm (PolyLab Monitor) wird gestartet und zeichnet den zeitlichen Verlauf des Drehmomentes, das an den Walzenrotoren anliegt, und die Temperatur der Probe auf. Die pigmentierte PVC-Mischung wird bei 190°C und 50 rpm geknetet. Um die Eignung des Pigments bezüglich der Stabilisierung von PVC zu bestimmen, wird das Maximum des Drehmoments auf der Zeitachse in Minuten angegeben, bei dem die höchste Produkttemperatur gemessen wurde. Nach diesem Maximum des Drehmomentes fällt das Drehmoment stark ab, da sich nach dieser Zeit das PVC in zunehmenden Maß zersetzt und dadurch die Viskosität des gekneteten Produktes verringert. Diese Werte werden mit dem entsprechenden Wert des gleichen, aber nicht beschichtetem Pigmentpulver verglichen. Je länger die Zeitdauer bis zum genannten Maximum ist, desto höher ist die Stabilität des mit dem Pigment eingefärbten PVC.

### II: Beispiele

### II.1 Eigenschaften der verwendeten anorganischen Pigmente und Kunststoffe

**Bayferrox^{®} 110 Pigmentpulver** der Fa. LANXESS Deutschland GmbH: Hämatit (rotes Eisenoxid, α-Fe₂O₃) mit einer BET-Oberfläche nach DIN ISO 9277 von 13-16 m²/g.

**Bayferrox^{®} 330-Paste:** Magnetit (schwarzes Eisen(II,III)-oxid, Fe₃O₄) als Paste der Firma LANXESS Deutschland GmbH, aus der durch Trocknung und Mahlung Bayferrox^{®} 330 Pulver produziert wird. Das pulverförmige Pigment weist eine BET-Oberfläche nach DIN ISO 9277 von 9-17 m²/g auf. Alternativ kann auch das pulverförmige Pigment Bayferrox^{®} 330 mit Wasser auf die entsprechende Pigmentkonzentration angemaischt werden.

**Bayferrox^{®} 420-Paste:** Goethit (gelbes Eisenoxidhydroxid, α-FeOOH) als Paste der Firma LANXESS Deutschland GmbH, aus der durch Trocknung und Mahlung Bayferrox^{®} 420 Pulver produziert wird. Das pulverförmige Pigment weist eine BET-Oberfläche nach DIN ISO 9277 von 11-15 m²/g auf). Alternativ kann auch das pulverförmige Pigment Bayferrox^{®} 420 mit Wasser auf die entsprechende Pigmentkonzentration (s. Beispiele) angemaischt werden.

**Bayferrox^{®} 920-Paste:** Goethit, α-FeOOH-Paste der Firma LANXESS Deutschland GmbH, aus der durch Trocknung und Mahlung Bayferrox^{®} 920 Pulver produziert wird. Das pulverförmige Pigment weist eine BET-Oberfläche nach DIN ISO 9277 von 11-15 m²/g auf. Alternativ kann auch das pulverförmige Pigment Bayferrox^{®} 920 mit Wasser auf die entsprechende Pigmentkonzentration (s. Beispiele) angemaischt werden.

**Bayferrox^{®} 943-Paste:** Lepidokrokit (Eisenoxidhydroxid, γ-FeOOH) als Paste der Firma LANXESS Deutschland GmbH, aus der durch Trocknung und Mahlung Bayferrox^{®} 943 Pulver produziert wird. Das pulverförmige Pigment weist eine BET-Oberfläche nach DIN ISO 9277 von 16-19 m²/g auf. Alternativ kann auch das pulverförmige Pigment Bayferrox^{®} 943 mit Wasser auf die entsprechende Pigmentkonzentration angemaischt werden.

**Bayferrox^{®} 3950 Pigmentpulver** der Fa. LANXESS Deutschland GmbH: Zinkferrit (ZnFe₂O₄) mit einer BET-Oberfläche nach DIN ISO 9277 von 5-7 m²/g.

**Bayferrox^{®} 645T Pigmentpulver** der Fa. LANXESS Deutschland GmbH: nicht stöchiometrisches Manganferrit (mit <9 Gew.% MnO-Anteil) mit einer BET-Oberfläche nach DIN ISO 9277 von 8-13 m²/g.

**SorVyl DB 6668 Natur 3/03:** Hart-PVC-Compound der Fa. Polymerchemie (Pulverform, stabilisiert mit Ca/Zn, wobei der Gehalt an Bis(pentan-2,4-dionato)calcium unter 1 Gew.% liegt, mit Erweichungspunkt >120°C, Flammpunkt > 190°C, Zündtemperatur > 300°C, Dichte nach DIN EN ISO 1183-1, Verfahren A von 1,39 g/cm³, Schüttdichte nach DIN EN ISO 60 von 0,54 g/ml, Thermostabilität nach DIN EN 60811-3-2 von größer/gleich 25 Min.).

**VESTOLIT^{®} B 7021 Ultra:** Homopolymer Mikro-S-PVC der Fa. Vestolit (Pulverform, K-Wert nach DIN EN ISO 1628-2 von 70, Viskositätszahl nach DIN EN ISO 1628-2 von 125 cm³/g , Schüttdichte nach DIN EN ISO 60 von 0,3 von g/cm³, Siebanalyse - Rückstand auf 0,063 mm-Sieb nach DIN EN ISO 1624 von < 1%, Wassergehalt nach K. Fischer DIN 53 715 von ≤ 0,3%, pH-Wert des wässrigen Auszuges nach DIN EN ISO 1264 von 8, Pastenviskosität 1,5 /s von 1,8 Pa s, Pastenviskosität 45 /s von 2,2 Pa s).

### II.2 Erfindungsgemäße Beispiele und Vergleichsbeispiele

### Beispiel 1

Zu 5 dm³ wässriger Suspension von Bayferrox^{®} 110 (9,39 mol α-Fe₂0₃) mit einem pH-Wert von ca. 4,5 wurden bei Raumtemperatur unter Rühren 574 mL einer MgSO₄-Lösung (2,02 mol/dm³) zugegeben. Anschließend wurden pro mol α-Fe₂O₃ unter Rühren 0,25 mol NaOH als Lösung innerhalb von 30 min zugetropft (310 mL mit Konzentration 7,65 mol/dm³). Die Suspension wurde 60 Min. nachgerührt. Der pH-Wert der Suspension lag bei ≥ 12.

### Beispiel 2

Zu 5 dm³ wässriger Suspension von Bayferrox^{®} 110 (9,39 mol α-Fe₂O₃) mit einem pH-Wert von ca. 4,5 wurde bei Raumtemperatur unter Rühren 1148 mL einer MgSO₄-Lösung (2,02 mol/dm³ als MgO) zugegeben. Anschließend wurden pro mol α-Fe₂O₃ unter Rühren 0,51 mol NaOH innerhalb von 60 Min. zugetropft (625 mL mit Konzentration 7,65 mol/dm³). Die Suspension wurde 60 Min. nachgerührt. Der pH-Wert der Suspension lag bei ≥ 12.

### Beispiel 3

Zu 5 dm³ wässriger Suspension von Bayferrox^{®} 110 (9,39 mol α-Fe₂O₃) mit einem pH-Wert von ca. 4,5 wurde bei Raumtemperatur unter Rühren 162 mL einer MgSO₄-Lösung (2,02 mol/dm³ als MgO) zugegeben. Anschließend wurden unter Rühren pro mol α-Fe₂O₃ 0,068 mol NaOH innerhalb von 30 Min. zugetropft (84 mL mit Konzentration 7,65 mol/dm³). Die Suspension wurde 60 Min. nachgerührt. Der pH-Wert der Suspension lag bei ≥ 12.

### Beispiel 4

Zu 2,13 dm³ wässriger Suspension von Bayferrox^{®} 110 (4,01 mol α-Fe₂O₃) mit einem pH-Wert von ca. 4,5 wurde bei Raumtemperatur unter Rühren 5517 mL einer MgSO₄-Lösung (1,15 mol/dm³ als MgO) zugegeben. Anschließend wurden pro mol α-Fe₂O₃ unter Rühren 3,18 mol NaOH innerhalb von 60 Min. zugetropft (mit Hilfe von 7,65 mol/dm³-Lösung). Die Suspension wurde 60 Min. nachgerührt. Der pH-Wert der Suspension lag bei ≥ 12.

### Beispiel 5 (Vergleichsbeispiel)

Zu 5 dm³ wässriger Suspension von Bayferrox^{®} 110 (9,39 mol α-Fe₂O₃) mit einem pH-Wert von ca. 4,5 wurde unter Rühren NaOH-Lösung (0,06 mol, 7,65 mol/dm³) innerhalb von 30 Min. zugetropft Die Suspension wurde 60 Min. nachgerührt. Der pH-Wert der Suspension lag bei ca. 10.

### Beispiel 6 (Vergleichsbeispiel)

Zu 5 dm³ wässriger Suspension von Bayferrox^{®} 110 (9,39 mol α-Fe₂O₃) mit einem pH-Wert von ca. 4,5 wurde unter Rühren NaOH-Lösung (0,18 mol, 7,65 mol/dm³) innerhalb von 30 Min. zugetropft Die Suspension wurde 60 Min. nachgerührt. Der pH-Wert der Suspension lag bei ≥ 12. Die Produkte aus den Beispielen 1 bis 6 wurden nach beendeter Reaktion über eine Nutsche filtriert, gewaschen, bis die Leitfähigkeit des Filtrates unter 300 µS/cm betrug, im Trockenschrank bei 180°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 7

Zu 7,7 kg Bayferrox^{®} 420-Paste mit 19,4 Gew.% Pigmentgehalt und mit einem pH-Wert von 6-7 wurden bei 60°C unter Rühren 1,12 mol MgO aus einer MgSO₄-Lsg. (1,15 mol/dm³ als MgO) zugegeben. Anschließend wurde unter Rühren NaOH-Lösung (7,7 mol/dm³) innerhalb von 15 Min. zugetropft, bis der pH-Wert von ca.10 erreicht wurde.

### Beispiel 8

Zu 7,7 kg Bayferrox^{®} 420-Paste mit 19,4 Gew.% Pigmentgehalt und mit einem pH-Wert von 6-7 wurden bei 60°C unter Rühren 2,24 mol MgO aus einer MgSO₄-Lsg. (1,15 mol/dm³ als MgO) zugegeben. Anschließend wurde unter Rühren NaOH-Lösung (7,7 mol/dm³) innerhalb von 15 Min. zugetropft, bis der pH-Wert von ca. 10 erreicht wurde.

Die Produkte aus den Beispielen 7 und 8 wurden nach beendeter Reaktion über eine Nutsche filtriert, gewaschen, bis die Leitfähigkeit des Filtrates unter 300 µS/cm betrug, im Trockenschrank bei 120°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 9

Zu 3,29 kg Bayferrox^{®} 920-Paste mit 130,8 g/dm³ Pigment und mit einem pH-Wert von 5-6 wurden bei 50 °C unter Rühren 1,65 mol NaOH als Lösung (7,87 mol/dm³) zugegeben. Anschließend wurden unter Rühren 0,82 mol Mg, aus einer MgSO₄-Lösung. (2,05 mol/dm³ als MgO) über 15 Min. zugetropft. Der pH-Wert der Suspension lag bei ca. 10.

### Beispiel 10

Zu 3,29 kg Bayferrox^{®} 920-Paste mit 130,8 g/dm³ Pigment und mit einem pH-Wert von 5-6 wurden bei 50°C unter Rühren 0,82 mol Mg, aus einer MgSO₄-Lösung (2,05 mol/dm³ als MgO) zugegeben. Anschließend wurden unter Rühren 1,65 mol NaOH (7,87 mol/dm³) über 15 Min. zugetropft. Der pH-Wert der Suspension lag bei ca. 10.

Die Produkte aus den Beispielen 9 und 10 wurden nach beendeter Reaktion über eine Nutsche filtriert, gewaschen, bis die Leitfähigkeit des Filtrates unter 500 µS/cm betrug, im Trockenschrank bei 80°C bis zur Gewichtskonstanz getrocknet und auf einer Schlagkreuz-Mühle gemahlen.

Die Eigenschaften der Produkte 1 bis 10 sind in der Tabelle 1 und 2 zu finden. Die Beispiele 1 bis 10 weisen einen Calciumgehalt von 0,001 bis 0,05 Gew.% bezogen auf das Gesamtgewicht des Pigmentes auf.

### Beispiel 11

Zu 4,7 dm³ wässriger Suspension von Bayferrox ^{®} 330-Paste (6,48 mol Fe₃O₄) mit einem pH-Wert von 5,8 wurden bei 60°C unter Rühren 866 mL einer MgSO₄-Lösung (2,58 mol/dm³) zugegeben. Anschließend wurden pro mol Fe₃O₄ unter Rühren 0,86 mol NaOH als Lösung innerhalb von 15 min zugetropft (379 g mit Konzentration 7,9 mol/dm³). Die Suspension wurde 60 Min. nachgerührt. Der pH-Wert der Suspension lag bei >11.

### Beispiel 12

Zu 2,85 dm³ wässriger Suspension von Bayferrox ^{®} 330-Paste (3,24 mol Fe₃O₄) mit einem pH-Wert von 5,8 wurden bei 60°C unter Rühren 2856 mL einer MgSO₄-Lösung (2,58 mol/dm³) zugegeben. Anschließend wurden pro mol Fe₃O₄ unter Rühren 5,74 mol NaOH als Lösung innerhalb von 15 min zugetropft (3000 g mit Konzentration 7,9 mol/dm³). Die Suspension wurde 60 Min. nachgerührt. Der pH-Wert der Suspension lag bei > 11.

Die Produkte aus den Beispielen 11 bis 12 wurden nach beendeter Reaktion über eine Nutsche filtriert, gewaschen, bis die Leitfähigkeit des Filtrates unter 300 µS/cm betrug, im Trockenschrank bei 95°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 13

Zu 5 dm³ wässriger Suspension von Bayferrox ^{®} 3950 (6,22 mol ZnFe₂O₄) mit einem pH-Wert von ca. 7 wurden bei 60°C unter Rühren 1442 mL einer MgSO₄-Lösung (2,58 mol/dm³) zugegeben. Anschließend wurden pro mol ZnFe₂O₄ unter Rühren 1,5 mol NaOH als Lösung innerhalb von 15 min zugetropft (1500 g mit Konzentration 7,9 mol/dm³). Die Suspension wurde 60 Min. nachgerührt. Der pH-Wert der Suspension lag bei > 11.

### Beispiel 14

Zu 2,5 dm³ wässriger Suspension von Bayferrox ^{®} 3950 (3,11 mol ZnFe₂O₄) mit einem pH-Wert von ca. 7 wurden bei 60°C unter Rühren 1443 mL einer MgSO₄-Lösung (2,58 mol/dm³) zugegeben. Anschließend wurden pro mol ZnFe₂O₄ unter Rühren 3 mol NaOH als Lösung innerhalb von 15 min zugetropft (1500 g mit Konzentration 7,9 mol/dm³). Die Suspension wurde 60 Min. nachgerührt. Der pH-Wert der Suspension lag bei > 11.

Die Produkte aus den Beispielen 13 bis 14 wurden nach beendeter Reaktion über eine Nutsche filtriert, gewaschen, bis die Leitfähigkeit des Filtrates unter 300 µS/cm betrug, im Trockenschrank bei 120°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 15

Zu 5 dm³ wässriger Suspension von Bayferrox ^{®} 645T ( 1500g) mit einem pH-Wert von ca. 6 wurden bei 60°C unter Rühren 395 mL einer MgSO₄-Lösung (2,83 mol/dm³) zugegeben. Anschließend wurden unter Rühren 2,24 mol NaOH als Lösung innerhalb von 15 min zugetropft (362 g mit Konzentration 7,9 mol/dm³). Die Suspension wurde 60 Min. nachgerührt. Der pH-Wert der Suspension lag bei > 11.

### Beispiel 16

Zu 5 dm³ wässriger Suspension von Bayferrox ^{®} 645T ( 1500g) mit einem pH-Wert von ca. 6 wurden bei 60°C unter Rühren 1974 mL einer MgSO₄-Lösung (2,83 mol/dm³) zugegeben. Anschließend wurden unter Rühren 13,95 mol NaOH als Lösung innerhalb von 15 min zugetropft (2250 g mit Konzentration 7,9 mol/dm³). Die Suspension wurde 60 Min. nachgerührt. Der pH-Wert der Suspension lag bei > 11.

Die Produkte aus den Beispielen 15 bis 16 wurden nach beendeter Reaktion über eine Nutsche filtriert, gewaschen, bis die Leitfähigkeit des Filtrates unter 300 µS/cm betrug, im Trockenschrank bei 120°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 17

Zu 8,01 dm³ wässriger Suspension von Bayferrox ^{®} 943-Paste (16,88 mol FeOOH) mit einem pH-Wert von ca. 6 wurden bei Raumtemperatur unter Rühren 900 mL einer MgSO₄-Lösung (2,48 mol/dm³) zugegeben. Anschließend wurden pro mol FeOOH unter Rühren 0,26 mol NaOH als Lösung innerhalb von 15 min zugetropft (724 g mit Konzentration 7,9 mol/dm³). Die Suspension wurde 60 Min. nachgerührt. Der pH-Wert der Suspension lag bei > 11.

### Beispiel 18

Zu 8,01 dm³ wässriger Suspension von Bayferrox ^{®} 943-Paste (16,88 mol FeOOH) mit einem pH-Wert von ca. 6 wurden bei Raumtemperatur unter Rühren 5455 mL einer MgSO₄-Lösung (2,73 mol/dm³) zugegeben. Anschließend wurden pro mol FeOOH unter Rühren 1,76 mol NaOH als Lösung innerhalb von 15 min zugetropft (4800 g mit Konzentration 7,9 mol/dm³). Die Suspension wurde 60 Min. nachgerührt. Der pH-Wert der Suspension lag bei >13.

Die Produkte aus den Beispielen 17 bis 18 wurden nach beendeter Reaktion über eine Nutsche filtriert, gewaschen, bis die Leitfähigkeit des Filtrates unter 300 µS/cm betrug, im Trockenschrank bei 120°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 19

Zu 3,3 dm³ wässriger Suspension von Bayferrox ^{®} 110 (6,26 mol Fe₂O₃) mit einem pH-Wert von ca. 4,5 wurden bei 60°C unter Rühren 6476 mL einer MgSO₄-Lösung (2,6 mol/dm³) zugegeben. Anschließend wurden pro mol Fe₂O₃ unter Rühren 5,39 mol NaOH als Lösung innerhalb von 15 min zugetropft (5440 g mit Konzentration 7,9 mol/dm³). Die Suspension wurde 60 Min. nachgerührt. Der pH-Wert der Suspension lag bei > 13.

Das Produkt aus dem Beispiel 19 wurde nach beendeter Reaktion über eine Nutsche filtriert, gewaschen, bis die Leitfähigkeit des Filtrates unter 300 µS/cm betrug, im Trockenschrank bei 180°C bis zur Gewichtskonstanz getrocknet und auf einer Bauermeister-Mühle (Schlagkreuz-Mühle mit einem Siebeinsatz, Maschenweite 1 mm) gemahlen.

Die Eigenschaften der Produkte 11 bis 19 sind in der Tabelle 2 zu finden. Die Beispiele 11 bis 19 weisen einen Calciumgehalt von 0,001 bis 0,1 Gew.% bezogen auf das Gesamtgewicht des Pigmentes auf.

## Patentansprüche

1. Beschichtetes Pigment enthaltend zumindest ein anorganisches Pigment aus der Gruppe Eisenoxide, Eisenoxidhydroxide, Zinkferrite, Magnesiumferrite und/oder Manganferrite, wobei das zumindest eine anorganische Pigment mit einer Beschichtung enthaltend Hydroxide und/oder Oxide von Magnesium und/oder Calcium ausgestattet ist, wobei das beschichtete Pigment von 3,1 bis 30 Gew.% Magnesium, oder von 5,0 bis 30 Gew.% Calcium, bezogen auf das Gesamtgewicht des beschichteten Pigments enthält.

2. Beschichtetes Pigment gemäß Anspruch 1 bestehend aus zumindest einem anorganischen Pigment aus der Gruppe Eisenoxide, Eisenoxidhydroxide, Zinkferrite, Magnesiumferrite und/oder Manganferrite, wobei das zumindest eine anorganische Pigment mit einer Beschichtung enthaltend Hydroxide und/oder Oxide von Magnesium und/oder Calcium, bevorzugt mit einer Beschichtung enthaltend Hydroxide von Magnesium und/oder Calcium, ausgestattet ist.

3. Beschichtetes Pigment gemäß Anspruch 1 enthaltend zumindest ein anorganisches Pigment aus der Gruppe Eisenoxide, Eisenoxidhydroxide, Zinkferrite, Magnesiumferrite und/oder Manganferrite, wobei das zumindest eine anorganische Pigment mit einer Beschichtung enthaltend Hydroxide und/oder Oxide von Magnesium und/oder Calcium ausgestattet ist, wobei die Oberfläche eines Kerns aus dem anorganischen Pigment direkt mit einer ihn umhüllenden Schicht der Hydroxide und/oder Oxide von Magnesium und/oder Calcium verbunden ist.

4. Beschichtetes Pigment gemäß einem der Ansprüche 1 bis 3, wobei das im beschichteten Pigment enthaltene Pigment Hämatit ist, und das beschichtete Pigment einen isoelektrischen Punkt von <7, bevorzugt von <6,8 aufweist.

5. Beschichtetes Pigment gemäß einem der Ansprüche 1 bis 3, wobei das im beschichteten Pigment enthaltene Pigment aus der Gruppe der Eisenoxide, Eisenoxidhydroxide, Zinkferrite, Magnesiumferrite und/oder Manganferrite, wobei Hämatit ausgenommen ist, ausgewählt, wobei das beschichtete Pigment bevorzugt einen isoelektrischen Punkt von 2 bis 12 aufweist.

6. Beschichtetes Pigment gemäß einem der Ansprüche 1 bis 5, wobei das beschichtete Pigment von 3,5 bis 25 Gew.%, Magnesium, oder von 5,5 bis 25 Gew.% Calcium, bezogen auf das Gesamtgewicht des beschichteten Pigments enthält.

7. Kunststoffprodukt enthaltend zumindest ein beschichtetes Pigment gemäß einem der Ansprüche 1 bis 6 sowie weiter enthaltend PVC, bevorzugt Hart-PVC.

8. Kunststoffprodukt enthaltend zumindest ein beschichtetes Pigment gemäß einem der Ansprüche 1 bis 6 und als Kunststoff zumindest ein Polymer, wobei zumindest 50 Gew.%, bevorzugt zumindest 80 Gew.% des Kunststoffes aus dem Monomer Vinylchlorid aufgebaut sind.

9. Kunststoffprodukt gemäß Anspruch 7 oder 8 enthaltend von größer 10 bis 90 Gew.%, bevorzugt von 20 bis 70 Gew.% beschichtetes Pigment gemäß einem der Ansprüche 1 bis 6.

10. Kunststoffprodukt gemäß Anspruch 7 oder 8 enthaltend von 0,1 bis 10 Gew.%, bevorzugt von 0,5 bis 5 Gew.% beschichtetes Pigment gemäß einem der Ansprüche 1 bis 6.

11. Kunststoffprodukt gemäß einem der Ansprüche 7 bis 10 enthaltend von 0 bis 15 Gew.%, bevorzugt von 0 bis 12 Gew.% Weichmacher bezogen auf die im Kunststoffprodukt enthaltene Menge an PVC.

12. Kunststoffprodukt gemäß einem der Ansprüche 7 bis 11 enthaltend eine Mischung aus pulverförmigen PVC und beschichtetem Pigment gemäß einem der Ansprüche 1 bis 6.

13. Verfahren zur Herstellung von beschichtetem Pigment gemäß einem der Ansprüche 1 bis 6 umfassend zumindest die Schritte
a) Bereitstellen einer wässrigen Suspension zumindest eines anorganisches Pigment aus der Gruppe Eisenoxiden, Eisenoxidhydroxiden, Zinkferriten, Magnesiumferriten und/oder Manganferriten,
b) Auffällung der Beschichtung aus Hydroxiden und/oder Oxiden von Magnesium und/oder Calcium auf das anorganische Pigment durch Zugabe von Magnesium- und/oder Calciumsalzen, bevorzugt in gelöster Form, zu der Suspension aus Schritt a) und danach Zugabe eines Fällungsmittels aus der Gruppe Alkalihydroxide, Erdalkalihydroxide, bevorzugt in gelöster Form, zu der Suspension oder
b') Auffällung der Beschichtung aus Hydroxiden und/oder Oxiden von Magnesium und/oder Calcium auf das anorganische Pigment durch Zugabe eines Fällungsmittels aus der Gruppe Alkalihydroxide, Erdalkalihydroxide, bevorzugt in gelöster Form, zu der Suspension aus Schritt a) und danach Zugabe von Magnesium- und/oder Calciumsalzen, bevorzugt in gelöster Form, zu der Suspension,
wobei das beschichtete Pigment erhalten wird.

14. Verfahren zur Herstellung von beschichtetem Pigment gemäß Anspruch 13, umfassend zusätzlich einen, zwei, drei oder vier der Schritte i) Isolierung des beschichteten Pigmentes, ii) Wäsche des beschichteten Pigmentes, iii) Trocknung des beschichteten Pigmentes, und iv) Zerkleinerung des beschichteten Pigmentes, vorzugsweise in der angegebenen Reihenfolge.

15. Verfahren zur Herstellung von beschichtetem Pigment gemäß einem der Ansprüche 13 oder 14, in dem ein Kalzinierungsschritt, bevorzugt bei Temperaturen größer als 600°C, ausgeschlossen ist.

16. Verfahren zur Herstellung der Kunststoffprodukte gemäß einem der Ansprüche 7 bis 12 durch Kneten oder Extrudieren von PVC mit dem beschichteten Pigment gemäß einem der Ansprüche 1 bis 6.

17. Verfahren zur Herstellung des Kunststoffprodukts gemäß Anspruch 11 durch Vermischung von zumindest einem beschichteten Pigment gemäß einem der Ansprüche 1 bis 6 und pulverförmigem PVC, bevorzugt durch Mischen der Bestandteile kurz unter dem Schmelzpunkt des Kunststoffes.

18. Verwendung des beschichteten Pigments gemäß einem der Ansprüche 1 bis 6 zur Einfärbung von PVC, bevorzugt von Hart-PVC.

19. Produkt enthaltend mindestens ein Kunststoffprodukt gemäß einem der Ansprüche 7 bis 12.

20. Produkt nach Anspruch 19, wobei das Produkt Fensterprofile, Rohre, Fußbodenbeläge, Isoliermaterial oder Dachbahnen umfasst.

## Claims

1. Coated pigment comprising at least one inorganic pigment from the group of iron oxides, iron oxide hydroxides, zinc ferrites, magnesium ferrites and/or manganese ferrites, wherein the at least one inorganic pigment has been provided with a coating comprising hydroxides and/or oxides of magnesium and/or calcium, wherein the coated pigment comprises from 3.1% to 30% by weight of magnesium, or from 5.0% to 30% by weight of calcium, based on the total weight of the coated pigment.

2. Coated pigment according to Claim 1, consisting of at least one inorganic pigment from the group of iron oxides, iron oxide hydroxides, zinc ferrites, magnesium ferrites and/or manganese ferrites, wherein the at least one inorganic pigment has been provided with a coating comprising hydroxides and/or oxides of magnesium and/or calcium, preferably with a coating comprising hydroxides of magnesium and/or calcium.

3. Coated pigment according to Claim 1, comprising at least one inorganic pigment from the group of iron oxides, iron oxide hydroxides, zinc ferrites, magnesium ferrites and/or manganese ferrites, wherein the at least one inorganic pigment has been provided with a coating comprising hydroxides and/or oxides of magnesium and/or calcium, wherein the surface of a core of the inorganic pigment has been bonded directly to a surrounding layer of the hydroxides and/or oxides of magnesium and/or calcium.

4. Coated pigment according to any of Claims 1 to 3, wherein the pigment present in the coated pigment is haematite, and the coated pigment has an isoelectric point of < 7, preferably of < 6.8.

5. Coated pigment according to any of Claims 1 to 3, wherein the pigment present in the coated pigment is selected from the group of the iron oxides, iron oxide hydroxides, zinc ferrites, magnesium ferrites and/or manganese ferrites, excluding haematite, wherein the coated pigment preferably has an isoelectric point of 2 to 12.

6. Coated pigment according to any of Claims 1 to 5, wherein the coated pigment comprises from 3.5% to 25% by weight of magnesium, or from 5.5% to 25% by weight of calcium, based on the total weight of the coated pigment.

7. Plastics product comprising at least one coated pigment according to any of Claims 1 to 6, and further comprising PVC, preferably rigid PVC.

8. Plastics product comprising at least one coated pigment according to any of Claims 1 to 6 and at least one polymer as plastic, wherein at least 50% by weight, preferably at least 80% by weight, of the plastic is formed from the monomer vinyl chloride.

9. Plastics product according to Claim 7 or 8, comprising from greater than 10% to 90% by weight, preferably from 20% to 70% by weight, of coated pigment according to any of Claims 1 to 6.

10. Plastics product according to Claim 7 or 8, comprising from 0.1% to 10% by weight, preferably from 0.5% to 5% by weight, of coated pigment according to any of Claims 1 to 6.

11. Plastics product according to any of Claims 7 to 10, comprising from 0% to 15% by weight, preferably from 0% to 12% by weight, of plasticizer, based on the amount of PVC present in the plastics product.

12. Plastics product according to any of Claims 7 to 11, comprising a mixture of pulverulent PVC and coated pigment according to any of Claims 1 to 6.

13. Process for producing coated pigment according to any of Claims 1 to 6, comprising at least the steps of
a) providing an aqueous suspension of at least one inorganic pigment from the group of iron oxides, iron oxide hydroxides, zinc ferrites, magnesium ferrites and/or manganese ferrites,
b) precipitating the coating of hydroxides and/or oxides of magnesium and/or calcium onto the inorganic pigment by adding magnesium and/or calcium salts, preferably in dissolved form, to the suspension from step a) and then adding a precipitant from the group of alkali metal hydroxides, alkaline earth metal hydroxides, preferably in dissolved form, to the suspension or
b') precipitating the coating of hydroxides and/or oxides of magnesium and/or calcium onto the inorganic pigment by adding a precipitant from the group of alkali metal hydroxides, alkaline earth metal hydroxides, preferably in dissolved form, to the suspension from step a) and then adding magnesium and/or calcium salts, preferably in dissolved form, to the suspension,
to obtain the coated pigment.

14. Process for producing coated pigment according to Claim 13, additionally comprising one, two, three or four of the steps of i) isolating the coated pigment, ii) washing the coated pigment, iii) drying the coated pigment, and iv) comminuting the coated pigment, preferably in the sequence specified.

15. Process for producing coated pigment according to either of Claims 13 and 14, in which a calcination step, preferably at temperatures greater than 600°C, is ruled out.

16. Process for producing the plastics products according to any of Claims 7 to 12 by kneading or extruding PVC with the coated pigment according to any of Claims 1 to 6.

17. Process for producing the plastics product according to Claim 11 by mixing at least one coated pigment according to any of Claims 1 to 6 and pulverulent PVC, preferably by mixing the constituents just below the melting point of the plastic.

18. Use of the coated pigment according to any of Claims 1 to 6 for colouring PVC, preferably rigid PVC.

19. Product comprising at least one plastics product according to any of Claims 7 to 12.

20. Product according to Claim 19, wherein the product comprises window profiles, pipes, floor coverings, insulation material or roofing membranes.

## Revendications

1. Pigment revêtu contenant au moins un pigment inorganique du groupe oxydes de fer, oxyhydroxydes de fer, ferrites de zinc, ferrites de magnésium et/ou ferrites de manganèse, l'au moins un pigment inorganique comportant un revêtement contenant des hydroxydes et/ou des oxydes de magnésium et/ou de calcium, le pigment revêtu contenant de 3,1 à 30 % en poids de magnésium ou de 5,0 à 30 % en poids de calcium, par rapport au poids total du pigment revêtu.

2. Pigment revêtu selon la revendication 1, constitué d'au moins un pigment inorganique du groupe oxydes de fer, oxyhydroxydes de fer, ferrites de zinc, ferrites de magnésium et/ou ferrites de manganèse, l'au moins un pigment inorganique comportant un revêtement contenant des hydroxydes et/ou des oxydes de magnésium et/ou de calcium, de préférence un revêtement contenant des hydroxydes de magnésium et/ou de calcium.

3. Pigment revêtu selon la revendication 1, contenant au moins un pigment inorganique du groupe oxydes de fer, oxyhydroxydes de fer, ferrites de zinc, ferrites de magnésium et/ou ferrites de manganèse, l'au moins un pigment inorganique comportant un revêtement contenant des hydroxydes et/ou des oxydes de magnésium et/ou de calcium, la surface d'un noyau en le pigment inorganique étant directement liée à une couche, qui l'enveloppe, des hydroxydes et/ou oxydes de magnésium et/ou de calcium.

4. Pigment revêtu selon l'une des revendications 1 à 3, le pigment contenu dans le pigment revêtu étant une hématite, et le pigment revêtu présentant un point isoélectrique < 7, de préférence < 6,8.

5. Pigment revêtu selon l'une des revendications 1 à 3, le pigment contenu dans le pigment revêtu étant choisi dans le groupe des oxydes de fer, des oxyhydroxydes de fer, des ferrites de zinc, des ferrites de magnésium et/ou des ferrites de manganèse, à l'exception de l'hématite, le pigment revêtu présentant de préférence un point isoélectrique de 2 à 12.

6. Pigment revêtu selon l'une des revendications 1 à 5, le pigment revêtu contenant de 3,5 à 25 % en poids de magnésium ou de 5,5 à 25 % en poids de calcium, par rapport au poids total du pigment revêtu.

7. Produit plastique contenant au moins un pigment revêtu selon l'une des revendications 1 à 6, et contenant en outre du PVC, de préférence du PVC rigide.

8. Produit plastique contenant au moins un pigment revêtu selon l'une des revendications 1 à 6 et, en tant que plastique, au moins un polymère, au moins 50 % en poids, de préférence au moins 80 % en poids du plastique étant à base du monomère chlorure de vinyle.

9. Produit plastique selon la revendication 7 ou 8, contenant plus de 10 et jusqu'à 90 % en poids, de préférence de 20 à 70 % en poids du pigment revêtu selon l'une des revendications 1 à 6.

10. Produit plastique selon la revendication 7 ou 8, contenant de 0,1 à 10 % en poids, de préférence de 0,5 à 5 % en poids d'un pigment revêtu selon l'une des revendications 1 à 6.

11. Produit plastique selon l'une des revendications 7 à 10, contenant de 0 à 15 % en poids, de préférence de 0 à 12 % en poids d'un plastifiant, par rapport à la quantité de PVC contenue dans le produit plastique.

12. Produit plastique selon l'une des revendications 7 à 11, contenant un mélange de PVC en poudre et d'un pigment revêtu selon l'une des revendications 1 à 6.

13. Procédé de fabrication d'un pigment revêtu selon l'une des revendications 1 à 6, comprenant au moins les étapes suivantes :
a) fourniture d'une suspension aqueuse d'au moins un pigment inorganique du groupe oxydes de fer, oxyhydroxydes de fer, ferrites de zinc, ferrites de magnésium et/ou ferrites de manganèse,
b) précipitation du revêtement constitué d'hydroxydes et/ou d'oxydes de magnésium et/ou de calcium sur le pigment inorganique par addition de sels de magnésium et/ou de calcium, de préférence sous forme dissoute, à la suspension de l'étape a), puis addition, à la suspension, d'un agent précipitant du groupe hydroxydes de métaux alcalins, hydroxydes de métaux alcalino-terreux, de préférence sous forme dissoute, ou
b') précipitation du revêtement constitué d'hydroxydes et/ou d'oxydes de magnésium et/ou de calcium sur le pigment inorganique par addition, à la suspension de l'étape a), d'un agent précipitant du groupe hydroxydes de métaux alcalins, hydroxydes de métaux alcalino-terreux, de préférence sous forme dissoute, puis addition, à la suspension, de sels de magnésium et/ou de calcium, de préférence sous forme dissoute, avec obtention du pigment revêtu.

14. Procédé de fabrication du pigment revêtu selon la revendication 13, comprenant en outre une, deux, trois ou quatre des étapes suivantes : i) isolement du pigment revêtu, ii) lavage du pigment revêtu, iii) séchage du pigment revêtu, et iv) broyage du pigment revêtu, de préférence dans l'ordre indiqué.

15. Procédé de fabrication du pigment revêtu selon l'une des revendications 13 ou 14, dans lequel est exclue une étape de calcination, de préférence à des températures supérieures à 600 °C.

16. Procédé de fabrication de produits plastiques selon l'une des revendications 7 à 12, par malaxage ou extrusion de PVC avec le pigment revêtu selon l'une des revendications 1 à 6.

17. Procédé de fabrication du produit plastique selon la revendication 11 par mélange d'au moins un pigment revêtu selon l'une des revendications 1 à 6 et de PVC en poudre, de préférence par mélange des constituants à une température juste inférieure au point de fusion du plastique.

18. Utilisation du pigment revêtu selon l'une des revendications 1 à 6 pour colorer du PVC dans la masse, de préférence du PVC rigide.

19. Produit contenant au moins un produit plastique selon l'une des revendications 7 à 12.

20. Produit selon la revendication 19, le produit étant des profilés de fenêtre, des tubes, des revêtements de sol, un matériau isolant ou des bandes de toit.
